# EUROPEAN PATENT APPLICATION

(11) **EP 4 641 868 A1**
(43) Date of publication of application: **29.10.2025**
(21) Application number: 25159105.3
(22) Date of filing: 20.02.2025
(51) Int. Cl.: H02J 3/32, H02J 3/00, H02J 7/00

(54) **POWER DISPATCH SYSTEM AND METHOD**

(30) Priority: 24.04.2024 US 202463637944 P; 26.09.2024 CN 202411349209
(71) Applicant: Delta Electronics, Inc., Taoyuan City 33370 (TW)
(72) Inventor: Guo, Zong-Xian, 32063 Taoyuan City (TW); Lu, Ming-Yang, 32063 Taoyuan City (TW); Liu, Shih-Hung, 32063 Taoyuan City (TW); Chen, Ya-Chen, 32063 Taoyuan City (TW)
(74) Representative: Uexküll & Stolberg

(57) **Abstract**

A power dispatch system and a power dispatch method are provided. When a time span of the historical electricity usage data is greater than or equal to a preset value, an upper bound (UB) is determine according to the historical electricity usage data, the expected power demand and a dispatchable power. When the time span is less than the preset value, the upper and lower bounds (UB, LB) are determined according to the historical electricity usage data. When an actual power demand is greater than the upper bound (UB), the power system (1) receives an amount of power equal to the upper bound (UB), and the energy storage unit (11) discharges to supplement the power required by the power system (1). When the actual power demand is less than the lower bound (LB), the power system (1) receives an amount of power equal to the lower bound (LB), and the energy storage unit (11) receives the surplus power for charging.

## Description

### FIELD OF THE INVENTION

The present disclosure relates to a power dispatch system and method, and more particularly to a power dispatch system and method capable of dynamically adjusting power dispatch strategies.

### BACKGROUND OF THE INVENTION

Nowadays, the renewable energy rapidly becomes more and more popular (especially solar power and wind power) and becomes essential ways for satisfying power demand and reducing carbon emissions. However, the instability and seasonality of these renewable energy resources are a challenge to the stability and reliability of conventional power systems. The management of power systems becomes even more complicated due to mismatches between energy supply and demand and the violent variation of the power demands during different time periods.

To address these challenges, energy storage battery technology has become a key solution for achieving stable operation of power systems. Energy storage batteries can store surplus energy and release it when needed, thereby realizing peak-shaving and valley-filling, balancing the energy supply and demand, and enhancing the reliability of power systems. However, conventional methods usually employ a fixed charging and discharging strategy which is not dynamically adjusted according to actual requirements and dynamic conditions, and thus the best performance cannot be realized in different scenarios.

### SUMMARY OF THE INVENTION

The present disclosure provides a power dispatch system and method that can dynamically adjust the power dispatch strategy, thereby minimizing energy costs and improving energy efficiency while ensuring power supply stability, and also contributing to enhancing the sustainability of the power system.

In accordance with an aspect of the present disclosure, a power dispatch system is provided. The power dispatch system includes a power system, a database, an energy management unit and a control unit. The power system includes an energy storage unit. The database is configured to record historical electricity usage data of the power system. The energy management unit includes a data processing module, a prediction module and a dispatch module. The data processing module is configured to obtain the historical electricity usage data of the power system. The prediction module is configured to predict an expected power demand of the power system according to the historical electricity usage data of the power system. When a time span of the historical electricity usage data is greater than or equal to a preset value, the dispatch module is configured to perform a first mode to determine an upper bound according to the historical electricity usage data and the expected power demand of the power system and a dispatchable power of the energy storage unit. When the time span of the historical electricity usage data is less than the preset value, the dispatch module is configured to perform a second mode to determine the upper bound and a lower bound according to the historical electricity usage data of the power system. The control unit is connected to the energy management unit and the power system. When an actual power demand of the power system is greater than the upper bound, the control unit is configured to control the power system to receive an amount of power equal to the upper bound and control the energy storage unit to discharge and supply an amount of power equal to a difference between the actual power demand and the upper bound to the power system. When the actual power demand of the power system is less than the lower bound, the control unit is configured to control the power system to receive an amount of power equal to the lower bound and control the energy storage unit to receive an amount of power equal to a difference between the lower bound and the actual power demand for charging.

In accordance with another aspect of the present disclosure, a power dispatch method of a power system is provided. The power system includes an energy storage unit. The power dispatch method includes: recording historical electricity usage data of the power system by a database; obtaining the historical electricity usage data of the power system by a data processing module of an energy management unit; predicting an expected power demand of the power system according to the historical electricity usage data of the power system by a prediction module of the energy management unit; when a time span of the historical electricity usage data is greater than or equal to a preset value, performing a first mode by a dispatch module of the energy management unit to determine an upper bound according to the historical electricity usage data and the expected power demand of the power system and a dispatchable power of the energy storage unit; when the time span of the historical electricity usage data is less than the preset value, performing a second mode by the dispatch module to determine the upper bound and a lower bound according to the historical electricity usage data of the power system; when an actual power demand of the power system is greater than the upper bound, controlling the power system to receive an amount of power equal to the upper bound and controlling the energy storage unit to discharge and supply an amount of power equal to a difference between the actual power demand and the upper bound to the power system; and when the actual power demand of the power system is less than the lower bound, controlling the power system to receive an amount of power equal to the lower bound and controlling the energy storage unit to receive an amount of power equal to a difference between the lower bound and the actual power demand for charging.

### BRIEF DESCRIPTION OF THE DRAWINGS

FIG. 1 is a schematic block diagram illustrating a power dispatch system according to an embodiment of the present disclosure;
FIG. 2 is a schematic flow chart illustrating a power dispatch method according to an embodiment of the present disclosure;
FIG. 3 is a schematic flow chart illustrating the first mode performed by the dispatch module according to an embodiment of the present disclosure;
FIG. 4 exemplifies waveforms of the maximum value of the historical power demand, the upper bound, the power received from the power grid, and the actual power demand based on the upper bound set through the first mode;
FIG. 5A and FIG. 5B exemplify the upper and lower bounds set through the second mode; and
FIG. 6 exemplifies waveforms of the maximum value of the historical power demand, the upper bound, the power received from the power grid, the actual power demand, and the lower bound during off-peak hours and non-off-peak hours based on the upper and lower bounds set through the second mode.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only.

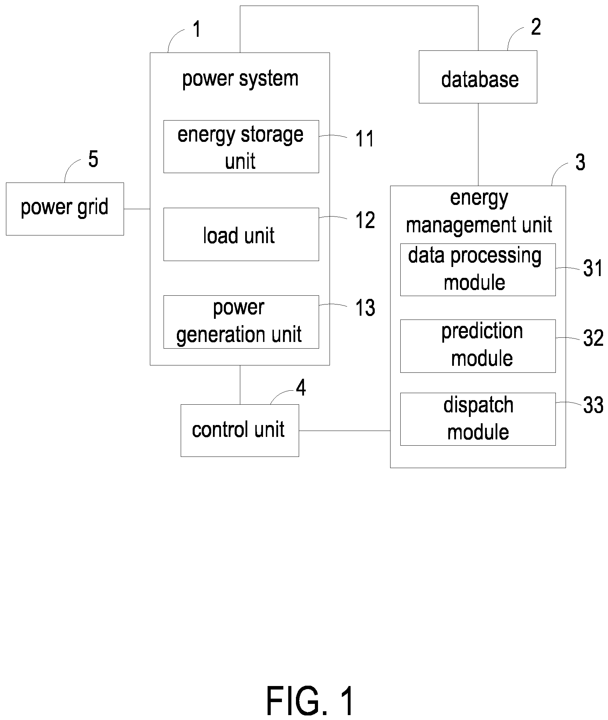

FIG. 1 is a schematic block diagram illustrating a power dispatch system according to an embodiment of the present disclosure. As shown in FIG. 1, the power dispatch system includes a power system 1, a database 2, an energy management unit 3, and a control unit 4. The power system 1 is electrically connected to a power grid 5 and may receive power from the power grid 5. In addition, the power system 1 includes an energy storage unit 11. The energy storage unit 11 may include an energy storage battery such as a lithium battery, a lead-acid battery, a sodium-sulfur battery, or a flow battery, but not limited thereto. The database 2 is configured to record historical electricity usage data of the power system 1 and is for example but not limited to be implemented by a server, a storage device (e.g., a solid-state drive), a processor, or a cloud server or cloud storage service. The energy management unit 3 includes a data processing module 31, a prediction module 32 and a dispatch module 33. The data processing module 31 is used to obtain the historical electricity usage data of the power system 1. The prediction module 32 is used to predict an expected power demand of the power system 1 according to the historical electricity usage data of the power system 1. The dispatch module 33 is used to set an upper bound and a lower bound to adjust the charging and discharging strategy of the energy storage unit 11 for achieving power dispatch. Further, the dispatch module 33 may dynamically adjust the upper bound and the lower bound according to real-time conditions.

Considering that the accurate prediction result from the prediction module 32 relies on sufficient historical electricity usage data, if the historical electricity usage data is insufficient, the prediction module 32 may either fail to produce the prediction result or produce the prediction result with lower accuracy. Accordingly, when a time span of the historical electricity usage data is greater than or equal to a preset value (i.e., the historical electricity usage data is sufficient), the dispatch module 33 performs a first mode to determine the upper bound according to the historical electricity usage data and expected power demand of the power system 1 and a dispatchable power of the energy storage unit 11. When the time span of the historical electricity usage data is less than the preset value (i.e., the historical electricity usage data is insufficient), the dispatch module 33 performs a second mode to determine the upper and lower bounds according to the historical electricity usage data of the power system 1. For example, the preset value may be three months, but not exclusively.

The control unit 4 is connected to the energy management unit 3 and the power system 1, and is configured to adjust the power received by the power system 1 and the charging and discharging of the energy storage unit 11 according to the upper and lower bounds set by the dispatch module 33. In specific, when the actual power demand of the power system 1 is greater than the upper bound, the control unit 4 controls the power system 1 to receive an amount of power equal to the upper bound and controls the energy storage unit 11 to discharge and supply an amount of power equal to the difference between the actual power demand and the upper bound to the power system 1. When the actual power demand of the power system 1 is less than the lower bound, the control unit 4 controls the power system 1 to receive an amount of power equal to the lower bound and controls the energy storage unit 11 to receive an amount of power equal to the difference between the lower bound and the actual power demand for charging. In other words, the upper and lower bounds may be regarded as the upper and lower limits on the amount of power received by the power system 1. When the actual power demand of the power system 1 is greater than the upper bound, the power system 1 receives the amount of power equal to the upper bound, and the energy storage unit 11 discharges to supplement the power demand of the power system. Conversely, when the actual power demand of the power system 1 is less than the lower bound, the power system 1 receives the amount of power equal to the lower bound, and the surplus power is used to charge the energy storage unit 11. In the present disclosure, the charging and discharging strategy of the energy storage unit 11 can be dynamically adjusted through adjusting the upper and lower bounds. It is noted that the power system 1 may receive power from the power grid 5 in this embodiment, but the present disclosure is not limited thereto. For instance, the power system 1 can also receive power from other power generation devices or energy storage devices.

When the power system 1 receives power from the power grid 5, the time-of-use pricing may be further considered. In particular, during non-off-peak hours, the energy storage unit 11 may discharge to reduce the amount of power that the power system 1 receives from the power grid 5. During off-peak hours, the energy storage unit 11 may be charged by receiving power from the power grid 5, thereby reducing energy costs and achieving cost savings. Additionally, dynamically adjusting the charging and discharging strategy of the energy storage unit 11 contributes to enhancing the sustainability of the power system 1.

The above-mentioned data processing module 31, prediction module 32, dispatch module 33, and control unit 4 may be implemented by suitable components (e.g., suitable processors and controllers) respectively, or may be integrated into a single component (e.g., a single circuit formed by discrete components and/or integrated circuit elements and capable of performing the functions of each module and unit). The specific implementations of those modules and unit are not limited in the present disclosure.

In the embodiment shown in FIG. 1, the power system 1 includes the energy storage unit 11, a load unit 12, and a power generation unit 13 which are electrically connected to each other. The load unit 12 may include any device with electricity demand, such as but not limited to charging stations for electric vehicles and lighting fixtures and electrical appliances in the area where the power system 1 is located. The power generation unit 13 may include any device with power generation capabilities, such as but not limited to photovoltaic power generation devices. It is noted that the actual power demand and expected power demand of the power system 1 are both based on the power demand of the whole power system 1. Particularly, when the power system 1 includes the load unit 12 and the power generation unit 13, the actual power demand of the power system 1 equals the difference between the actual power consumption of the load unit 12 and the actual power generation of the power generation unit 13, and the expected power demand of the power system 1 equals the difference between the expected power consumption of the load unit 12 and the expected power generation of the power generation unit 13. In addition, when the power generation unit 13 includes the power generation device which is significantly affected by weather, the data processing module 31 further obtains the environment information of the power system 1 (e.g., weather information at the location of the power system 1). Under this circumstance, the prediction module 32 predicts the expected power demand of the power system 1 according to both the historical electricity usage data and the environment information. Thereby, the prediction module 32 may predict the expected power demand of the power system more accurately. In an embodiment, the prediction module 32 may build models (e.g., machine learning models or deep learning models) for the power consumption of the load unit 12 and the power generation of the power generation unit 13 according to the historical electricity usage data and environment information, and the prediction module 32 performs predictions through these models.

Additionally, in some embodiments, the power system 1 may not include the power generation unit 13. In such cases, the actual power demand of the power system 1 equals the actual power consumption of the load unit 12, and the expected power demand of the power system 1 equals the expected power consumption of the load unit 12.

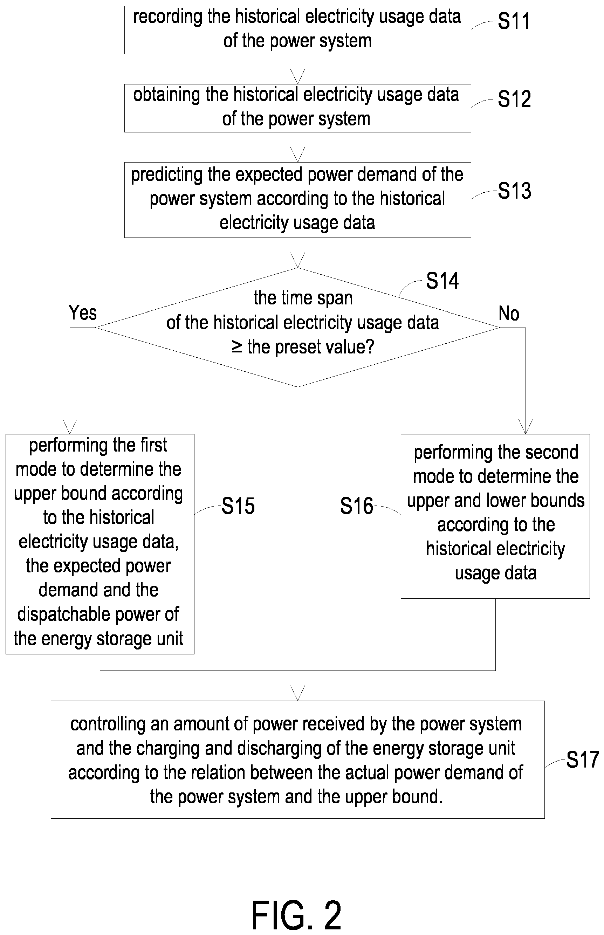

Please refer to FIG. 2 in conjunction with FIG. 1. FIG. 2 is a schematic flow chart illustrating a power dispatch method according to an embodiment of the present disclosure, and the power dispatch method is applicable to the power dispatch system described in the above embodiments. As shown in FIG. 2, the power dispatch method includes the following steps. In step S11, the historical electricity usage data of the power system 1 is recorded by the database 2. In step S12, the historical electricity usage data of the power system 1 is obtained by the data processing module 31. In step S13, the expected power demand of the power system 1 is predicted according to the historical electricity usage data of the power system 1 by the prediction module 32. In step S14, whether the time span of the historical electricity usage data is greater than or equal to the preset value is determined. If the determination result of step S14 is positive, step S15 is performed. In step S15, the first mode is performed by the dispatch module 33 to determine the upper bound according to the historical electricity usage data and expected power demand of the power system 1 and the dispatchable power of the energy storage unit 11. Conversely, if the determination result of step S14 is negative, step S16 is performed. In step S16, the second mode is performed by the dispatch module 33 to determine the upper bound and lower bound according to the historical electricity usage data of the power system 1. In step S17, an amount of power received by the power system 1 and the charging and discharging of the energy storage unit 11 are controlled according to the relation between the actual power demand of the power system 1 and the upper bound. In specific, When the actual power demand of the power system 1 is greater than the upper bound, the power system 1 is controlled to receive an amount of power equal to the upper bound, and the energy storage unit 11 is controlled to discharge and supply an amount of power equal to the difference between the actual power demand and the upper bound to the power system 1. When the actual power demand of the power system 1 is less than the lower bound, the power system 1 is controlled to receive an amount of power equal to the lower bound, and the energy storage unit 11 is controlled to receive an amount of power equal to the difference between the lower bound and the actual power demand for charging.

The first mode and second mode performed by the dispatch module 33 in the foregoing power dispatch system and power dispatch method would be described in detail as follows. It is noted that all steps in the first and second modes are performed by the dispatch module 33, which would not be repeated in the following sections.

In an embodiment, the sum of the upper bound, set by performing the first mode, and the dispatchable power of the energy storage unit 11 is equal to the actual power demand of the power system 1. This ensures the stability of power supply of the power system 1 while maximizing the utilization of the dispatchable power of the energy storage unit 11.

In addition, in an embodiment, after each passage of a first duration, the dispatch module 33 determines the upper bound for the subsequent first duration according to the historical electricity usage data and expected power demand of the power system 1 and the dispatchable power of the energy storage unit 11. The length of the first duration may be adjusted according to actual requirements. For example, the shorter the first duration is, the more accurate the expected power demand predicted by the prediction module 32 will be, which allows the upper bound set accordingly to better meet the requirements. However, if the first duration is too short, the computational load and control complexity of the dispatch module 33 and the overall system may be excessively increased.

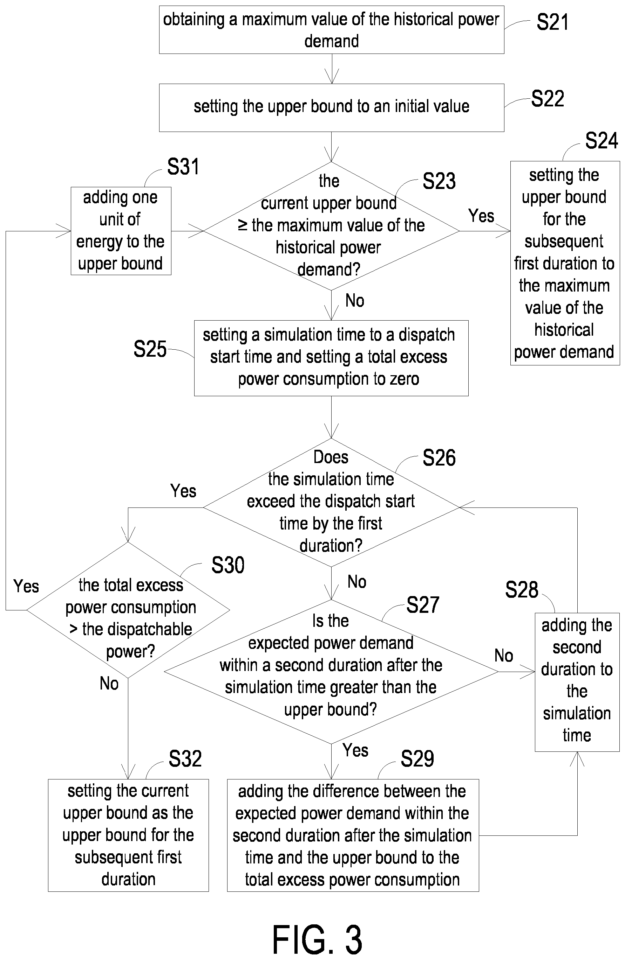

Please refer to FIG. 3. FIG. 3 is a schematic flow chart illustrating the first mode performed by the dispatch module 33 according to an embodiment of the present disclosure. In an embodiment, in the first mode, the dispatch module 33 performs the following steps after each passage of the first duration to determine the upper bound for the subsequent first duration.

Firstly, in step S21, a maximum value of the historical power demand is obtained according to the historical electricity usage data of the power system 1.

Next, in step S22, the upper bound is set to an initial value. For instance, the initial value may be lower than an average or a minimum value of the historical power demand.

Then, in step S23, whether the current upper bound is greater than or equal to the maximum value of the historical power demand is determined.

If the determination result of step S23 is positive, step S24 is performed to set the upper bound for the subsequent first duration to the maximum value of the historical power demand. If the determination result of step S23 is negative, step S25 is performed to set a simulation time to a dispatch start time and to set a total excess power consumption to zero.

Afterwards, in step S26, whether the simulation time exceeds the dispatch start time by the first duration is determined.

If the determination result of step S26 is negative, step S27 is performed to determine whether the expected power demand within a second duration after the simulation time is greater than the upper bound. If the determination result of step S27 is negative, step S28 is performed to add the second duration to the simulation time, and then step S26 is performed again. If the determination result of step S27 is positive, step S29 is performed to add the difference between the expected power demand within the second duration after the simulation time and the upper bound to the total excess power consumption. Then, step S28 is performed to add the second duration to the simulation time, and step S26 is performed again. It is noted that the second duration is shorter than the first duration.

If the determination result of step S26 is positive, step S30 is performed to determine whether the current total excess power consumption is greater than the dispatchable power of the energy storage unit 11.

If the determination result of step S30 is positive, step S31 is performed to add one unit of energy to the upper bound, and then step S23 is performed again. If the determination result of step S30 is negative, step S32 is performed to set the current upper bound as the upper bound for the subsequent first duration.

It is noted that all the above steps are completed before the actual dispatch start time so as to set the upper bound for the first duration after the actual dispatch start time in advance.

For example, assume the first duration is one hour, the second duration is five minutes, the dispatch start time is 9:00, and the initial value is 1 kWh, which is lower than the maximum value of the historical power demand. According to the process shown in FIG. 3, when the initial value is 1 kWh and the simulation time is 9:00, whether the expected power demand between 9:00 and 9:05 is greater than the upper bound is determined. If the determination result is positive, the excess would be recorded in the total excess power consumption, and then the second duration is added to the simulation time to update the simulation time to 9:05. If the determination result is negative, the second duration is added to the simulation time to update the simulation time to 9:05. Then, whether the expected power demand between 9:05 and 9:10 is greater than the upper bound is determined. By repeating the above process, the one-hour period (the first duration) after the dispatch start time is divided into multiple five-minute segments (the second duration), and the portions of the expected power demand exceeding the upper bound in all the five-minute segments are summed up to obtain the total excess power consumption expected for the one hour after the dispatch start time. Next, whether the total excess power consumption is greater than the dispatchable power of the energy storage unit 11 is determined. If the determination result is negative (i.e., the total excess power consumption can be supplied by the energy storage unit 11), the current upper bound is set as the upper bound for the one-hour period after the actual dispatch start time. On the contrary, if the determination result is positive (i.e., the total excess power consumption is greater than the dispatchable power of the energy storage unit 11), it means that under the current upper bound, the dispatchable power of the energy storage unit 11 cannot meet the expected power demand of the power system 1. Therefore, the upper bound needs to be increased by one unit of energy (e.g., 1 kWh) to increase the power received by the power system 1. Then, the total excess power consumption is recalculated according to the adjusted upper bound to determine whether the total excess power consumption is still greater than the dispatchable power of the energy storage unit 11. By repeating the above process, an appropriate upper bound can be found. Base on the appropriate upper bound, the stability of power supply of the power system 1 is maintained while maximizing the proportion of power supplied by the energy storage unit 11. Under the circumstance that the power system 1 receives power from the power grid 5, the steps shown in FIG. 3 may be performed during non-off-peak hours to effectively reduce the amount of power received from the power grid 5, thereby reducing energy costs.

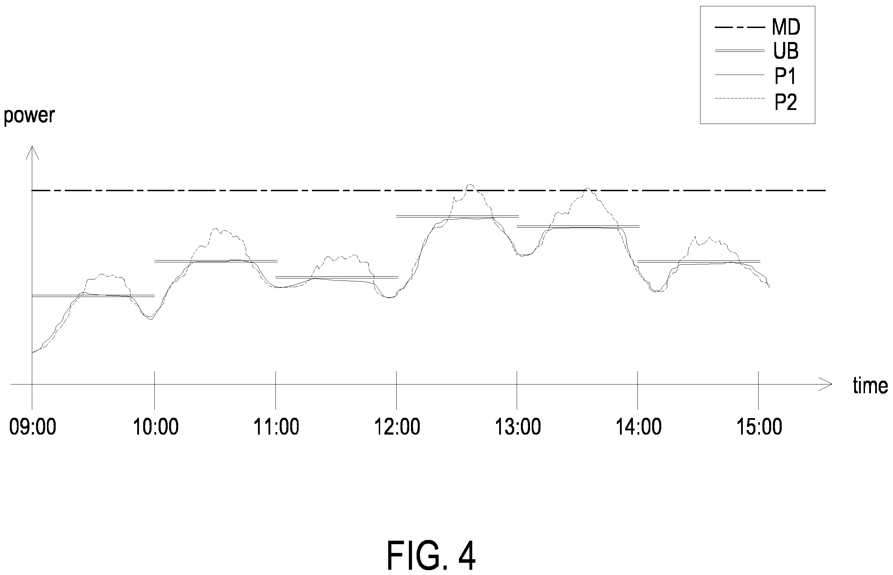

Taking the scenario of the power system 1 receiving power from the power grid 5 as an example, FIG. 4 exemplifies waveforms of the maximum value of the historical power demand, the upper bound, the power received from the power grid, and the actual power demand based on the upper bound set through the first mode. In the embodiment shown in FIG. 4, the power system 1 operates during non-off-peak hours, and the first duration is set to one hour. In FIG. 4, MD represents the maximum value of the historical power demand, UB represents the upper bound, P1 represents the power received by the power system 1 from the power grid 5, and P2 represents the actual power demand of the power system 1. As shown in FIG. 4, by dynamically adjusting the upper bound UB, the proportion of power supplied by the energy storage unit 11 can be maximized in each time period to keep the power P1 received from the power grid 5 within a certain range. Meanwhile, the stability of power supply of the power system 1 can still be maintained.

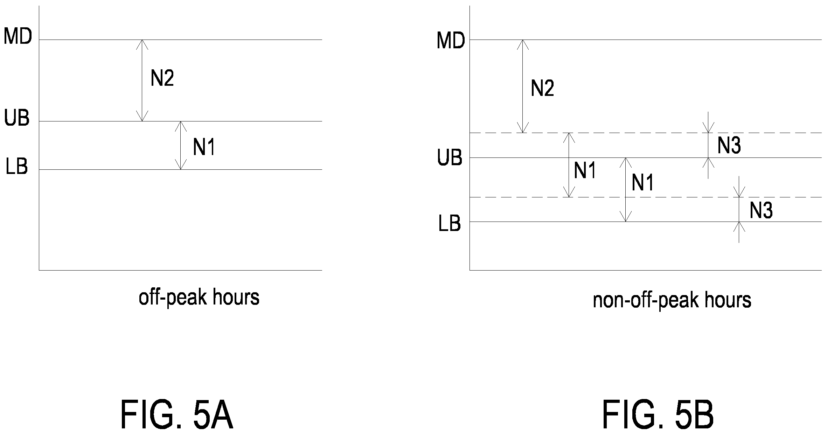

Please refer to FIG. 5A and FIG. 5B. FIG. 5A and FIG. 5B exemplify the upper and lower bounds set through the second mode. As mentioned above, when the time span of the historical electricity usage data is less than the preset value (i.e., the historical electricity usage data is insufficient), the dispatch module 33 performs the second mode to determine the upper and lower bounds according to the historical electricity usage data of the power system 1. Specifically, according to the historical electricity usage data of the power system 1, the maximum value MD, a minimum value and a maximum variation N1 of the historical power demand over several past periods are obtained. For example, assume the off-peak hours are divided into four periods, and according to the historical electricity usage data, the power demands for those four periods in the past off-peak hours are 60 kWh, 100 kWh, 110 kWh and 130 kWh, respectively. Among this power demands, the maximum value is the power demand of the fourth period (130 kWh), and the minimum value is the power demand of the first period (60 kWh). The variation from the first period to the second period is 40 kWh (=100 kWh - 60 kWh), the variation from the second period to the third period is 10 kWh (=110 kWh - 100 kWh), and the variation from the third period to the fourth period is 20 kWh (=130 kWh - 110 kWh), so the maximum variation N1 is the variation from the first period to the second period. Then, the upper bound UB is determined such that the sum of the upper bound UB and a difference N2 between the maximum value MD and minimum value of the historical power demand is equal to the maximum value MD of the historical power demand. In other words, the upper bound UB is equal to the maximum value MD of the historical power demand minus the difference N2 between the maximum value MD and the minimum value of the historical power demand. Finally, the lower bound LB is determined such that the sum of the lower bound LB and the maximum variation N1 of the historical power demand is equal to the upper bound UB.

In the case that the power system 1 includes the power generation unit 13, the historical power generation of the power generation unit 13 may also be considered when setting the upper bound UB and lower bound LB during non-off-peak hours. In specific, as shown in FIG. 5B, in this embodiment, according to the historical electricity usage data, the maximum value MD, the minimum value and the maximum variation N1 of the historical power demand over several past periods are obtained, and a maximum variation N3 of the historical power generation of the power generation unit 13 over the several past periods is obtained. The way of calculating the maximum variation N3 of historical power generation is similar to the way of calculating the maximum variation N1 of the historical power demand described above, and thus detailed descriptions thereof are omitted herein. During non-off-peak hours, the upper bound UB is determined such that the sum of the difference N2 between the maximum value MD and minimum value of the historical power demand, the maximum variation N3 of the historical power generation, and the upper bound UB is equal to the maximum value MD of the historical power demand. In other words, the upper bound UB is equal to the maximum value MD of the historical power demand minus the sum of the difference N2 between the maximum value MD and minimum value of the historical power demand and the maximum variation N3 of the historical power generation of the power generation unit 13. Finally, the lower bound LB is determined such that the sum of the lower bound LB and the maximum variation N1 of the historical power demand is equal to the upper bound UB.

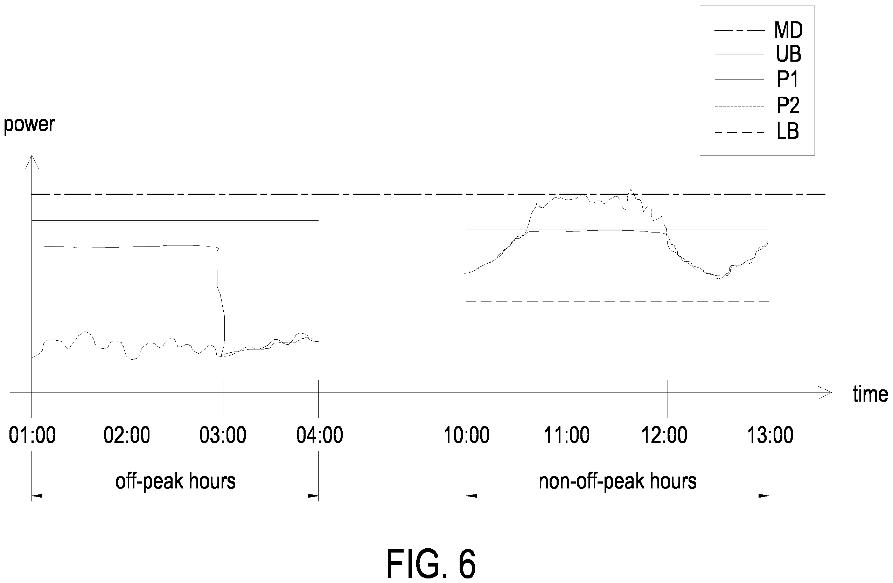

FIG. 6 exemplifies waveforms of the maximum value of the historical power demand, the upper bound, the power received from the power grid, the actual power demand, and the lower bound during off-peak hours and non-off-peak hours based on the upper and lower bounds set through the second mode. As shown in FIG. 6, during off-peak hours, the actual power demand P2 of the power system 1 is lower than the power P1 received from the power grid 5, and hence the surplus power is used to charge the energy storage unit 11. After 3:00, since the energy storage unit 11 is fully charged, the power P1 received from the power grid 5 is equal to the actual power demand P2 of the power system 1. During non-off-peak hours, the actual power demand P2 of the power system 1 exceeds the power P1 received from the power grid 5, and hence the energy storage unit 11 discharges its stored power to supplement the power required by the power system 1.

FIG. 4 takes 9:00 to 15:00 as an example of non-off- peak hours, and FIG. 6 takes 1:00 to 4:00 as an example of off-peak hours and takes 10:00 to 13:00 as an example of non-off- peak hours. However, it is noted that the actual off-peak hours and non-off-peak hours are not limited to these examples and actually depend on the specific application environment.

In summary, the present disclosure provides a power dispatch system and method that can dynamically adjust the charging and discharging strategy of the energy storage unit, thereby minimizing energy costs and improving energy efficiency while ensuring power supply stability, and also contributing to enhancing the sustainability of the power system.

## Claims

1. A power dispatch system, **characterized by** comprising:
a power system (1), comprising an energy storage unit (11);
a database (2), configured to record historical electricity usage data of the power system (1);
an energy management unit (3), comprising:
a data processing module (31), configured to obtain the historical electricity usage data of the power system (1);
a prediction module (32), configured to predict an expected power demand of the power system (1) according to the historical electricity usage data of the power system (1); and
a dispatch module (33), wherein when a time span of the historical electricity usage data is greater than or equal to a preset value, the dispatch module (33) is configured to perform a first mode to determine an upper bound (UB) according to the historical electricity usage data and the expected power demand of the power system (1) and a dispatchable power of the energy storage unit (11); and when the time span of the historical electricity usage data is less than the preset value, the dispatch module (33) is configured to perform a second mode to determine the upper bound (UB) and a lower bound (LB) according to the historical electricity usage data of the power system (1); and
a control unit (4), connected to the energy management unit (3) and the power system (1), wherein when an actual power demand of the power system (1) is greater than the upper bound (UB), the control unit (4) is configured to control the power system (1) to receive an amount of power equal to the upper bound (UB) and control the energy storage unit (11) to discharge and supply an amount of power equal to a difference between the actual power demand and the upper bound (UB) to the power system (1); and when the actual power demand of the power system (1) is less than the lower bound (LB), the control unit (4) is configured to control the power system (1) to receive an amount of power equal to the lower bound (LB) and control the energy storage unit (11) to receive an amount of power equal to a difference between the lower bound (LB) and the actual power demand for charging.

2. The power dispatch system according to claim 1, wherein in the first mode, a sum of the upper bound (UB) and the dispatchable power of the energy storage unit (11) is equal to the actual power demand of the power system (1).

3. The power dispatch system according to claim 1, wherein in the first mode, after each passage of a first duration, the dispatch module (33) is configured to determine the upper bound (UB) for a subsequent time of the first duration according to the historical electricity usage data and the expected power demand of the power system (1) and the dispatchable power of the energy storage unit (11).

4. The power dispatch system according to claim 1, wherein in the second mode, the dispatch module (33) is configured to:
obtain a maximum value (MD), a minimum value and a maximum variation (N1) of a historical power demand over several past periods according to the historical electricity usage data of the power system (1);
determine the upper bound (UB) such that a sum of the upper bound (UB) and a difference (N2) between the maximum value (MD) and the minimum value of the historical power demand is equal to the maximum value (MD) of the historical power demand; and
determine the lower bound (LB) such that a sum of the lower bound (LB) and the maximum variation (N1) of the historical power demand is equal to the upper bound (UB).

5. The power dispatch system according to claim 1, wherein the power system (1) further comprises a load unit (12) electrically connected to the energy storage unit (11), the actual power demand of the power system (1) comprises an actual power consumption of the load unit (12), and the expected power demand of the power system (1) comprises an expected power consumption of the load unit (12).

6. The power dispatch system according to claim 5, wherein the power system (1) further comprises a power generation unit (13) electrically connected to the energy storage unit (11), the actual power demand of the power system (1) equals a difference between the actual power consumption of the load unit (12) and an actual power generation of the power generation unit (13), and the expected power demand of the power system (1) equals a difference between the expected power consumption of the load unit (12) and an expected power generation of the power generation unit (13).

7. The power dispatch system according to claim 6, wherein in the second mode, the dispatch module (33) is configured to:
obtain a maximum value (MD), a minimum value and a maximum variation (N1) of a historical power demand and a maximum variation (N3) of a historical power generation of the power generation unit (13) over several past periods according to the historical electricity usage data of the power system (1);
during off-peak hours, determine the upper bound (UB) such that a sum of the upper bound (UB) and a difference (N2) between the maximum value (MD) and the minimum value of the historical power demand is equal to the maximum value (MD) of the historical power demand;
during non-off-peak hours, determine the upper bound (UB) such that a sum of the difference (N2) between the maximum value (MD) and the minimum value of the historical power demand, the maximum variation (N3) of the historical power generation, and the upper bound (UB) is equal to the maximum value (MD) of the historical power demand; and
determine the lower bound (LB) such that a sum of the lower bound (LB) and the maximum variation (N1) of the historical power demand is equal to the upper bound (UB).

8. The power dispatch system according to claim 1, wherein the data processing module (31) further obtains environment information of the power system (1), and the prediction module (32) is configured to predict the expected power demand of the power system (1) according to the historical electricity usage data and the environment information of the power system (1).

9. A power dispatch method of a power system (1) comprising an energy storage unit (11), the power dispatch method **characterized by** comprising:
recording historical electricity usage data of the power system (1) by a database (2);
obtaining the historical electricity usage data of the power system (1) by a data processing module (31) of an energy management unit (3);
predicting an expected power demand of the power system (1) according to the historical electricity usage data of the power system (1) by a prediction module (32) of the energy management unit (3);
when a time span of the historical electricity usage data is greater than or equal to a preset value, performing a first mode by a dispatch module (33) of the energy management unit (3) to determine an upper bound (UB) according to the historical electricity usage data and the expected power demand of the power system (1) and a dispatchable power of the energy storage unit (11);
when the time span of the historical electricity usage data is less than the preset value, performing a second mode by the dispatch module (33) to determine the upper bound (UB) and a lower bound (LB) according to the historical electricity usage data of the power system (1);
when an actual power demand of the power system (1) is greater than the upper bound (UB), controlling the power system (1) to receive an amount of power equal to the upper bound (UB) and controlling the energy storage unit (11) to discharge and supply an amount of power equal to a difference between the actual power demand and the upper bound (UB) to the power system (1); and
when the actual power demand of the power system (1) is less than the lower bound (LB), controlling the power system (1) to receive an amount of power equal to the lower bound (LB) and controlling the energy storage unit (11) to receive an amount of power equal to a difference between the lower bound (LB) and the actual power demand for charging.

10. The power dispatch method according to claim 9, wherein in the first mode, a sum of the upper bound (UB) and the dispatchable power of the energy storage unit (11) is equal to the actual power demand of the power system (1).

11. The power dispatch method according to claim 9, wherein in the first mode, after each passage of a first duration, the dispatch module (33) is utilized to determine the upper bound (UB) for a subsequent time of the first duration according to the historical electricity usage data and the expected power demand of the power system (1) and the dispatchable power of the energy storage unit (11).

12. The power dispatch method according to claim 9, wherein in the first mode, after each passage of a first duration, the dispatch module (33) is utilized to perform steps of:
(a) obtaining a maximum value (MD) of the historical power demand according to the historical electricity usage data of the power system (1);
(b) setting the upper bound (UB) to an initial value;
(c) when the upper bound (UB) at present is greater than or equal to the maximum value (MD) of the historical power demand, setting the upper bound (UB) for a subsequent time of the first duration to the maximum value (MD) of the historical power demand; and when the upper bound (UB) at present is less than the maximum value (MD) of the historical power demand, performing a step (d);
(d) setting a simulation time to a dispatch start time, and setting a total excess power consumption to zero;
(e) determining whether the simulation time exceeds the dispatch start time by the first duration;
(f) if a determination result of the step (e) is negative, determining whether the expected power demand within a second duration after the simulation time is greater than the upper bound (UB); if the expected power demand within the second duration after the simulation time is not greater than the upper bound (UB), adding the second duration to the simulation time and performing the step (e) again; if the expected power demand within the second duration after the simulation time is greater than the upper bound (UB), adding a difference between the expected power demand within the second duration after the simulation time and the upper bound (UB) to the total excess power consumption, adding the second duration to the simulation time, and performing the step (e) again, wherein the second duration is shorter than the first duration; and
(g) if the determination result of the step (e) is positive, determining whether the total excess power consumption is greater than the dispatchable power of the energy storage unit (11); if the total excess power consumption is greater than the dispatchable power of the energy storage unit (11), adding one unit of energy to the upper bound (UB) and performing the step (c) again; if the total excess power consumption is not greater than the dispatchable power of the energy storage unit (11), setting the upper bound (UB) at present as the upper bound (UB) for the subsequent time of the first duration.

13. The power dispatch method according to claim 9, wherein in the second mode, the dispatch module (33) is utilized to perform steps of:
obtaining a maximum value (MD), a minimum value and a maximum variation (N1) of a historical power demand over several past periods according to the historical electricity usage data of the power system (1);
determining the upper bound (UB) such that a sum of the upper bound (UB) and a difference (N2) between the maximum value (MD) and the minimum value of the historical power demand is equal to the maximum value (MD) of the historical power demand; and
determining the lower bound (LB) such that a sum of the lower bound (LB) and the maximum variation (N1) of the historical power demand is equal to the upper bound (UB).

14. The power dispatch method according to claim 9, wherein the power system (1) further comprises a load unit (12) electrically connected to the energy storage unit (11), the actual power demand of the power system (1) comprises an actual power consumption of the load unit (12), and the expected power demand of the power system (1) comprises an expected power consumption of the load unit (12).

15. The power dispatch method according to claim 14, wherein the power system (1) further comprises a power generation unit (13) electrically connected to the energy storage unit (11), the actual power demand of the power system (1) equals a difference between the actual power consumption of the load unit (12) and an actual power generation of the power generation unit (13), and the expected power demand of the power system (1) equals a difference between the expected power consumption of the load unit (12) and an expected power generation of the power generation unit (13).

16. The power dispatch method according to claim 15, wherein in the second mode, the dispatch module (33) is utilized to perform steps of:
obtaining a maximum value (MD), a minimum value and a maximum variation (N1) of a historical power demand and a maximum variation (N3) of a historical power generation of the power generation unit (13) over several past periods according to the historical electricity usage data of the power system (1);
during off-peak hours, determining the upper bound (UB) such that a sum of the upper bound (UB) and a difference (N2) between the maximum value (MD) and the minimum value of the historical power demand is equal to the maximum value (MD) of the historical power demand;
during non-off-peak hours, determining the upper bound (UB) such that a sum of the difference (N2) between the maximum value (MD) and the minimum value of the historical power demand, the maximum variation (N3) of the historical power generation, and the upper bound (UB) is equal to the maximum value (MD) of the historical power demand; and
determining the lower bound (LB) such that a sum of the lower bound (LB) and the maximum variation (N1) of the historical power demand is equal to the upper bound (UB).

17. The power dispatch method according to claim 9, further comprising:
obtaining environment information of the power system (1) by the data processing module (31), and predicting the expected power demand of the power system (1) according to the historical electricity usage data and the environment information of the power system (1) by the prediction module (32).
